# EUROPEAN PATENT APPLICATION

(11) **EP 1 936 147 A2**
(43) Date of publication of application: **25.06.2008**
(21) Application number: 07022324.3
(22) Date of filing: 16.11.2007
(51) Int. Cl.: F02B 37/013, F02B 37/12, F02B 37/16, F02B 37/18, F02B 37/24, F02D 41/00

(54) **Model-based turbocharger control**

(30) Priority: 20.12.2006 US 613789
(71) Applicant: International Engine Intellectual Property Company, LLC, Warrenville, IL 60555 (US)
(72) Inventor: de Ojeda, William, Chicago, IL 60622 (US)
(74) Representative: Kuhnen & Wacker

(57) **Abstract**

When a high-pressure compressor stage (32C) operates in an efficient operating zone defined on a compressor performance to one side of an optimum performance line that is spaced from but generally parallel to a choke limit line, the turbocharger (30) is controlled by closed-loop control of vanes of the high-pressure turbine stage (32T) while a by-pass around the high-pressure turbine stage (32T) is kept closed. When the high-pressure compressor stage (32C) operates in a zone between the optimum performance line and the choke limit line, the vanes of the high-pressure turbine stage (32T) are increasingly opened as operation of the high-pressure compressor stage (32C) increasingly approaches the choke limit line. When the vanes have been maximally opened and the high-pressure compressor stage (32C) has become unable to provide sufficient boost, the high-pressure turbine by-pass is opened to begin routing exhaust flow to a low-pressure turbine (34T) that operates a low-pressure compressor stage (34C), thereby avoiding choking of the charge air flow by the high-pressure compressor stage (32C).

## Description

### Field of the Invention

This invention relates to turbocharged internal combustion engines, particularly to a turbocharger control strategy for a motor vehicle diesel engine.

### Background of the Invention

Turbocharged diesel engines are powerplants of many large motor vehicles that are presently being manufactured in North America. A two-stage turbocharger, one type that can be used in such an engine, comprises high- and low-pressure turbines in series flow relationship in the exhaust system that operate high- and low-pressure compressors in series flow relationship in the intake system to develop boost. A single-stage turbocharger has only a single turbine and a single compressor.

The high-pressure turbine of a particular type of two-stage turbocharger has vanes whose position can be set by an associated actuator using a control strategy to control boost and/or back-pressure. A turbocharger that has such vanes is sometimes called a variable geometry turbocharger, or simply a VGT for short.

The ability to accurately control boost and/or backpressure is important to a control strategy for a turbocharged diesel engine from the standpoints of engine performance and tailpipe emissions. An example of a typical strategy processes various data to develop a data value for a desired set-point for boost. Changes in engine operation that affect that set-point typically call for the control system to respond promptly and accurately to force the actual boost to follow the changes in the desired set-point.

It is known to use by-pass valves to by-pass the high-pressure compressor and turbine stages of a two-stage VGT. Over a portion of the operating range of an engine that has a two-stage turbocharger and by-pass valves associated with the high-pressure compressor and turbine stages, the by-pass valves are closed. An actuator that controls the position of the vanes of the high-pressure turbine stage is controlled by the turbocharger control strategy to set vane position so that the turbocharger provides the boost corresponding to the set-point calculated by the engine control system when the control strategy for turbocharger control uses boost as the controlled parameter. A preferred strategy utilizes closed-loop control of the vane position to secure best correspondence of boost with the set-point.

The operating characteristic of the high-pressure compressor stage of a two-stage turbocharger can be defined on a compressor performance map by a surge limit line, a speed limit line, and a choke limit line. The horizontal axis of the map represents mass flow, preferably corrected for pressure and temperature at the air entrance to the turbocharger. The vertical axis represents the pressure ratio across the high-pressure stage. An area of the map generally bounded by the surge limit line, the speed limit line, and the choke limit line defines an efficient operating zone for the high-pressure compressor stage.

The choke limit line demarcates the efficient operating zone from a second zone where efficiency suffers to such an extent that the second zone is deemed an inefficient operating zone. When the engine is operated in such a way that operation of the high-pressure compressor stage approaches the choke limit line from within the efficient operating zone, the turbocharger control strategy should seek to avoid incipient loss of compressor efficiency.

A known strategy does this by opening the by-pass valve that is in parallel with the high-pressure turbine stage, causing exhaust to by-pass the high-pressure turbine stage and operate the low-pressure turbine stage which then operates the low-pressure compressor stage. Assuming that the by-pass valve that is in parallel with the high-pressure compressor stage is a normally closed check-type, the effect of operating the low-pressure compressor stage by the low-pressure stage turbine forces the check open so that charge air now flows through the check around the high-pressure compressor stage.

It is known to control the extent to which the by-pass is open by an open-loop, or feed-forward, control strategy such as by using a map containing data representing different by-pass valve openings correlated with mass air flow. The map is typically populated by engine calibrators. Once the high-pressure compressor stage by-pass valve has opened, the closed-loop vane control strategy loses its effectiveness, and the strategy for turbocharger control becomes one of essentially open-loop, or feed-forward, control.

When turbocharger operation is changing in a way that will lead to the opening of a closed by-pass (in other words the turbocharger compressor is operating in the efficient operating zone, but substantially at the choke limit line), the known feed-forward control strategy will start to open the closed by-pass around the high-pressure turbine. Various interactions can take place during this transition due to various factors and they may be unpredictable. The task of satisfactorily reconciling them by modifying the respective control strategies for the vanes and the by-pass when control of the turbocharger transitions from closed-loop of the vanes to open-loop control of the by-pass is difficult if not impossible as a practical matter. A vane control command and a by-pass control command may at times be incompatible or contradictory in this transition region, such as an one control strategy commanding an action that is counterproductive to one commanded by the other control strategy. Transitions between turbine vane control and by-pass control at the choke limit line are therefore in general less than totally seamless.

Avoidance of conflicts in turbocharger vane and by-pass response to command signals to their respective actuators in the transition region between turbine vane control and by-pass control can make the transition smoother, and that would be seen as a desirable improvement in a turbocharger control strategy.

### Summary of the Invention

The present invention relates to a strategy in furtherance of the goal of making transitions between by-pass control and turbine vane control in the vicinity of the choke limit line seamless.

Briefly, the invention contemplates modeling a turbocharger by defining inside the efficient operation zone, a line that is spaced from and generally parallel with the choke limit line. For convenience the defined line will be referred to as an optimum efficiency line. When engine operation causes turbocharger operation to enter the portion of the efficient operation zone lying between the optimum efficiency line and the choke limit line, the high-pressure compressor vanes begin to be controlled in a particular way that is a function of the optimum efficiency line and the choke limit line. This control mode generally provides a smoother transition from vane control to by-pass control, and vice versa, and generally avoids choking of the high-pressure compressor.

As the compressor operation enters the zone between the optimum efficiency line and the choke limit line, the inventive strategy provides for the use of a model developed through analytical and/or actual running of an engine under various conditions.

The model is embodied in the engine control system and based on relationships between pressure ratio across the compressor and mass air flow, the latter preferably being corrected for pressure and temperature entering the compressor. Upon compressor operation crossing the optimum efficiency line and approaching the choke limit line, the model generally calls for increasing the opening of the vanes as compressor operation increasingly approaches the choke limit line. When the vanes have been maximally opened, but choking of the compressor is imminent, the by-pass is opened to allow the low-pressure stage to become effective and thereby avoid high-pressure compressor choking.

Principles of the invention can be embodied in an engine control strategy without the inclusion of additional mechanical devices, making implementation of the inventive strategy cost-effective. In addition to improving engine performance, the invention can have a favorable effect on tailpipe emission compliance with applicable laws and regulations.

One generic aspect of the present invention relates to a method for control of a two-stage turbocharger in a turbocharged engine.

When the engine is operating to cause the high-pressure compressor stage to operate in an efficient operating zone defined on a compressor performance to one side of an optimum performance line that is spaced from but generally parallel to a choke limit line for the high-pressure compressor stage, the turbocharger is controlled by closed-loop control of vanes of the high-pressure turbine stage that operates the high-pressure compressor stage while a by-pass around the high-pressure turbine stage is kept closed.

When the engine is operating to cause operation of the high-pressure compressor stage in a zone on the map between the optimum performance line and the choke limit line, the vanes of the high-pressure turbine stage are increasingly opened as the engine operates to cause operation of the high-pressure compressor stage to increasingly approach the choke limit line.

When the vanes have been substantially maximally opened and the high-pressure compressor stage has become unable by itself to provide sufficient boost, the high-pressure turbine by-pass is opened to begin routing exhaust flow to a low-pressure turbine that operates the low-pressure compressor stage, thereby avoiding choking of the charge air flow by the high-pressure compressor stage.

The invention further relates to an engine embodying the method just described.

### Brief Description of the Drawings

Figure 1 is a general schematic diagram of a motor vehicle engine system having a two-stage turbocharger.

Figure 2 is a representative compressor performance map.

Figure 3 is a graph plot showing general principles for coordinated control of compressor vanes and by-pass valve in accordance with the inventive strategy.

Figure 4 is an enlarged view of a portion of Figure 2, and includes a graphical portrayal of vane control strategy when compressor operation is in the vicinity of the choke limit line.

Figure 5 is a map similar to Figure 2, but shows a representative trace of operation for a representative acceleration when the strategy is controlling manifold absolute pressure (MAP).

Figure 6 is an enlarged view of a portion of Figure 5, and includes a graphical portrayal of vanes control strategy when compressor operation is in the vicinity of the choke limit line.

Figure 7 includes a graphical portrayal of by-pass control strategy along with the vane control strategy already described.

Figure 8 is a graphical portrayal of vane control strategy applied to different engine accelerations.

### Description of the Preferred Embodiment

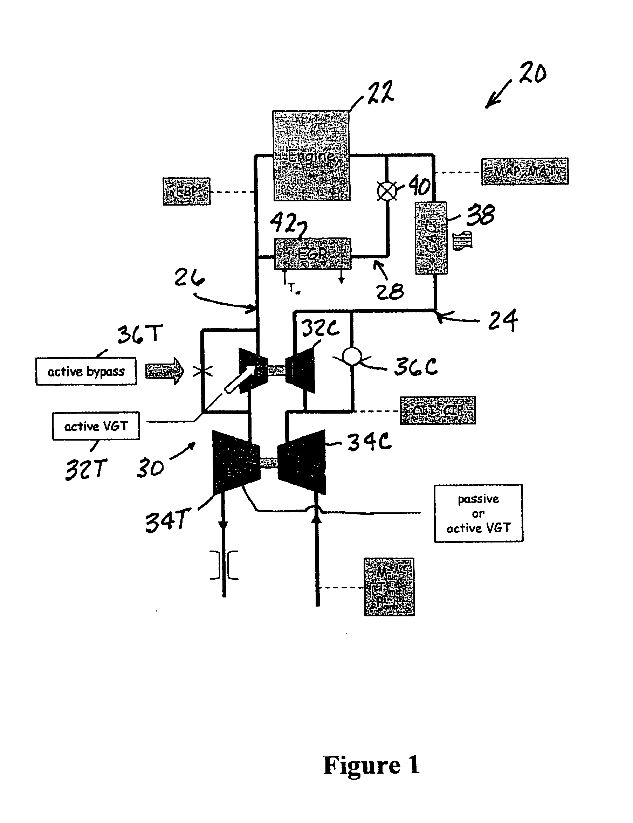

Figure 1 shows an exemplary internal combustion engine system 20 comprising an engine 22 containing cylinders in which combustion occurs, an intake system 24 through which charge air can enter engine 22 and an exhaust system 26 through which exhaust gasses resulting from combustion of air-fuel mixtures in the cylinders exit. An EGR system 28 provides for exhaust gas to be recirculated from exhaust system 26 to intake system 24.

Engine system 20 is representative of a turbocharged diesel engine comprising a two-stage turbocharger 30 that has a high-pressure turbine stage 32T in exhaust system 16 for operating a high-pressure compressor stage 32C in intake system 14 and a low-pressure turbine stage 34T in exhaust system 16 for operating a low-pressure compressor stage 34C in intake system 14.

A controlled by-pass valve 36T parallels turbine 32T, and a check-type by-pass valve 36C parallels compressor 32C. A charge air cooler 38 is downstream of compressor 32C and valve 36C.

EGR system 28 comprises an EGR cooler 42 through which exhaust gas passes before reaching an EGR valve 40 that is controlled by a duty-cycle signal applied to an electric actuator of the valve to set the extent to which the EGR valve is open.

Engine backpressure is represented by a parameter EBP while manifold absolute pressure is represented by a parameter MAP.

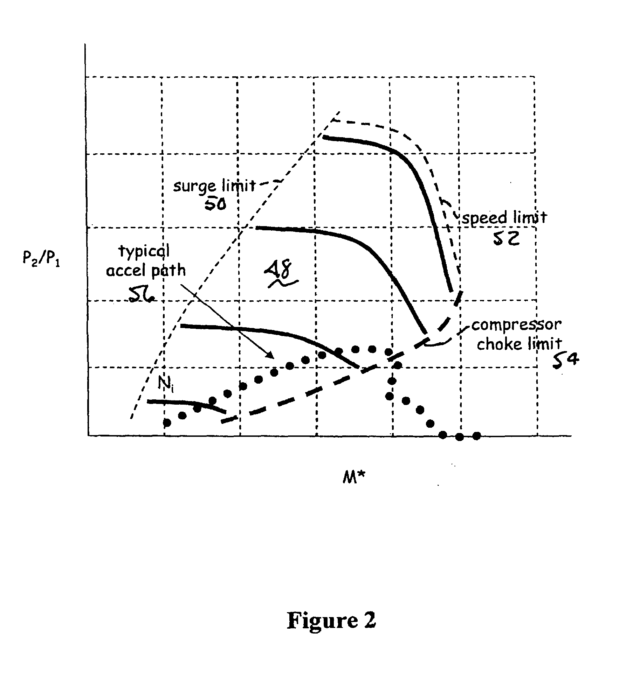

Within a range of engine operation, boost is controlled via an actuator that positions vanes of turbine stage 32T. Both valves 36T and 36C are closed when the engine operates within that range. A representative performance map for compressor stage 32C is shown in Figure 2. A zone 48 of efficient operation is bounded by a surge limit line 50, a speed limit line 52, and a choke limit line 54.

A trace 56 is representative of how compressor stage 32C operates to develop boost during a typical engine acceleration. In this particular example, exhaust back pressure is being controlled by the strategy. By-pass valve 36T is kept closed while stage 32C operates in zone 48. At certain points along trace 56 in the direction toward choke limit line 54, vanes of turbine 32T become more and more closed. The vanes approach being maximally closed as operation approaches choke limit line 54. When the operation of compressor stage 32C along trace 56 crosses choke limit line 54, stage 32C becomes incapable by itself of developing sufficient boost and begins to choke the charge air flow.

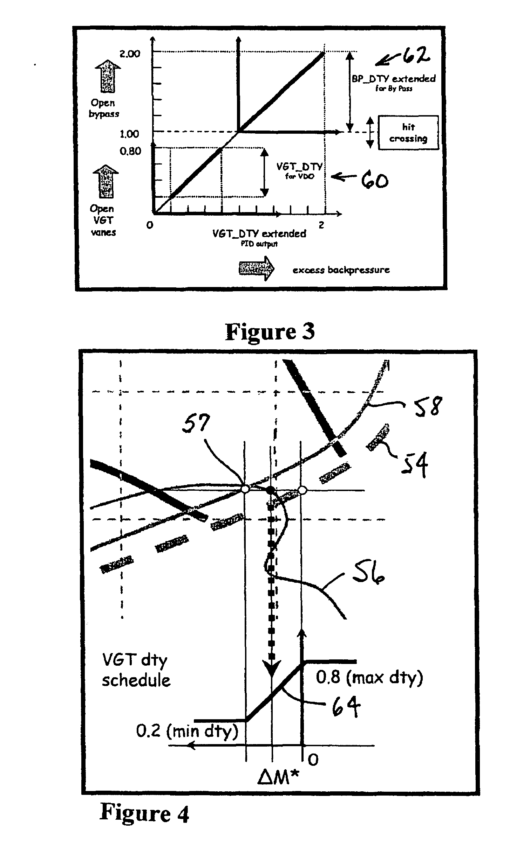

The inventive strategy seeks to avoid any substantial choking of the charge air flow by the high-pressure compressor stage. The strategy defines what the inventor refers to as a line of optimum efficiency on the compressor efficiency map. Figure 4 shows such a line 58 running in general parallelism with choke limit line 54, but slightly inset into zone 48 by some margin of spacing from the choke limit line.

Line 58 correlates pressure ratio across compressor stage 32C with respect to mass air flow, the latter being corrected by pressure CIP and temperature CIT entering the compressor. The strategy coordinates control of the vanes of stage 32T and of by-pass valve 36T when engine acceleration along trace 56 results in the operation of compressor stage 32C between the line of optimum efficiency 58 and the choke limit line 54.

Regardless of whether the control strategy is seeking to control exhaust back-pressure (EBP) or manifold absolute pressure (MAP), closed-loop control of the vanes of stage 32T alone, while by-pass valve 36T is kept closed, will suffice for some engine operating conditions. For other operating conditions, the vanes are operated fully open and the extent to which by-pass valve 36T is opened is controlled. The overall control strategy is graphically portrayed by Figure 3 where the horizontal axis represents a control parameter "VGT_DTY extended" and the vertical axis represents how the respective portions of the turbocharger, namely the vanes of high-pressure turbine stage 32T and by-pass valve 36T, are being controlled.

In the range extending to the normalized unit 0.80, only the vanes are being controlled while the by-pass is kept closed (reference numeral 60). In the range extending from the normalized unit 1.00 to the normalized unit 2.00, the vanes are operated substantially maximally open while valve 36T is being controlled (reference numeral 62).

The range between the normalized units of 0.80 and 1.00 corresponds to the distance between lines 54 and 58. When the high-stage compressor begins operating in the zone between lines 54 and 58, such as when it crosses into the zone at point 57, the strategy shown graphically at 64 in Figure 3 controls vane position. As compressor efficiency suffers, the vanes are increasingly opened. The particular relationship shown is a ramp up strategy 64 (see Figure 4) from a 0.2 duty cycle signal to the vane actuator to a 0.8 duty cycle to the valve actuator. At the latter duty cycle, the vanes are fully open.

When compressor efficiency has suffered to the extent that it becomes inefficient, meaning that it has crossed the choke limit line and is starting to restrict rather than aid charge air flow, then valve 36T is opened. Consequently whenever compressor efficiency is less than 1.00, meaning that the choke limit line has been passed, valve 36T is opened to whatever extent is needed to provide the boost called for by the engine control strategy. A control strategy that modulates the by-pass to control the by-pass opening may be used once the low-pressure compressor stage has been accelerated by the low-pressure turbine stage to a speed that can provide the needed boost.

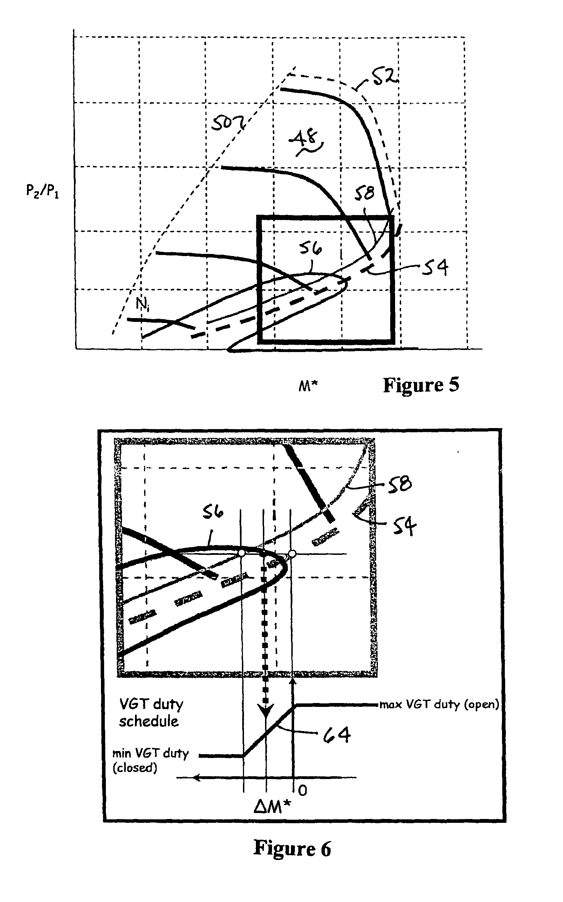

The same principles apply when MAP, rather than EBP, is being controlled by the strategy. This is portrayed graphically in Figures 5 and 6 where the trace 56 represents compressor operation during an acceleration using MAP control. The distance between lines 58 and 54 (ΔM*) is relatively narrow as measured along the horizontal axis. A value for ΔM* is selectable and corresponds to some percentage of loss of compressor efficiency, and in that way it may be considered to define the spacing distance between lines 54 and 58. It may be selected by engine calibrators during engine development testing.

The functional relationships of the inventive strategy provide transition from vane control to by-pass valve control during boost demand increases, and also vice versa after demand falls back to a magnitude where vane control alone can be effective.

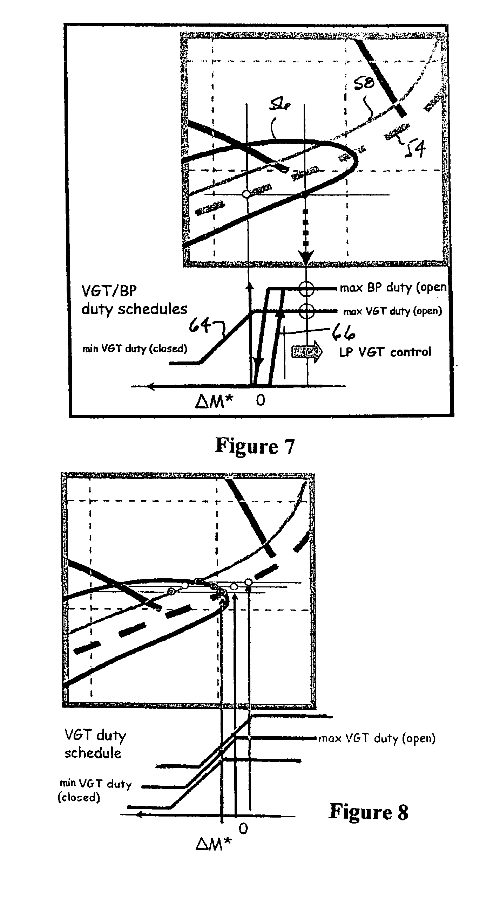

Figure 7 graphically shows a strategy 66 for by-pass control once the vanes have been maximally opened. The strategy for vane control 64 is also shown here. When engine acceleration has caused the duty-cycle signal being applied to by-pass valve 36T to be driven to maximum value, valve 36T is quickly operated to fully open for diverting maximum energy to the low-pressure turbine stage so that the low-pressure compressor can accelerate and become effective to force open the check around the high-pressure compressor stage. By providing some hysteresis in strategy 66, such as that shown, the by-pass will not be modulated to control MAP until after the low-pressure stage has been accelerated to a speed that allows for by-pass modulation control to be effective.

Figure 8 shows that the basic functional relationship of Figure 4 would apply when compressor operation crosses line 58 at other points, such as points 68, 70 for example.

The overall strategy can be implemented in an engine control system as a control algorithm that is repeatedly executed to calculate data values for vane control and by-pass valve control. It can also be implemented by maps having data values for vane control and by-pass valve control that are selected based on data values of certain relevant parameters.

While a presently preferred embodiment of the invention has been illustrated and described, it should be appreciated that principles of the invention apply to all embodiments falling within the scope of the invention that is generally described as follows.

## Claims

1. A method for control of a two-stage turbocharger in a turbocharged engine comprising:
when the engine is operating to cause a high-pressure compressor stage of the turbocharger to operate in an efficient operating zone defined on a compressor performance to one side of an optimum performance line that is spaced from but generally parallel to a choke limit line for the high-pressure compressor stage, controlling the turbocharger by closed-loop control of vanes of a high-pressure turbine stage of the turbocharger that operates the high-pressure compressor stage while keeping a by-pass around the high-pressure turbine stage closed;
when the engine is operating to cause operation of the high-pressure compressor stage in a zone on the map between the optimum performance line and the choke limit line, increasing the opening of the vanes of the high-pressure turbine stage as the engine operates to cause operation of the high-pressure compressor stage to increasingly approach the choke limit line;
and when the vanes have been substantially maximally opened and the high-pressure compressor stage has become unable by itself to provide sufficient boost, opening the high-pressure turbine by-pass to begin routing exhaust flow to a low-pressure turbine that operates a low-pressure compressor stage of the turbocharger and thereby avoid choking charge air flow by the high-pressure compressor stage.

2. A method as set forth in Claim 1 comprising wherein the step of increasing the opening of the vanes of the high-pressure turbine stage as the engine operates to cause operation of the high-pressure compressor stage to increasingly approach the choke limit line comprises applying a ramp function to an actuator that controls position of the vanes.

3. A method as set forth in Claim 1 comprising wherein the step of opening the high-pressure turbine by-pass to begin routing exhaust flow to a low-pressure turbine that operates a low-pressure compressor stage of the turbocharger and thereby avoid choking charge air flow by the high-pressure compressor stage comprises first maximally opening the by-pass to allow maximum acceleration of the low-pressure turbine stage, and once the low-pressure compressor stage has reached sufficient speed to provide requested boost that is greater than that which the high-pressure compressor can provide, modulating the by-pass to control boost as long as the high-pressure compressor remains incapable of providing requested boost by itself.

4. An engine comprising:
a two-stage turbocharger;
and a control system comprising a strategy for turbocharger control that
a) when the engine is operating to cause a high-pressure compressor stage of the turbocharger to operate in an efficient operating zone defined on a compressor performance to one side of an optimum performance line that is spaced from but generally parallel to a choke limit line for the high-pressure compressor stage, controls the turbocharger by closed-loop control of vanes of a high-pressure turbine stage of the turbocharger that operates the high-pressure compressor stage while keeping closed a by-pass around the high-pressure turbine stage;
b) when the engine is operating to cause operation of the high-pressure compressor stage in a zone on the map between the optimum performance line and the choke limit line, increases the opening of the vanes of the high-pressure turbine stage as the engine operates to cause operation of the high-pressure compressor stage to increasingly approach the choke limit line, and;
c) when the vanes have been substantially maximally opened and the high-pressure compressor stage has become unable by itself to provide sufficient boost, opens the high-pressure turbine by-pass to begin routing exhaust flow to a low-pressure turbine that operates a low-pressure compressor stage of the turbocharger and thereby avoid choking charge air flow by the high-pressure compressor stage.

5. An engine as set forth in Claim 4 wherein the strategy increases the opening of the vanes of the high-pressure turbine stage as the engine operates to cause operation of the high-pressure compressor stage to increasingly approach the choke limit line comprises by applying a ramp function to an actuator that controls position of the vanes.

6. An engine as set forth in Claim 4 wherein the strategy opens the high-pressure turbine by-pass to begin routing exhaust flow to a low-pressure turbine that operates a low-pressure compressor stage of the turbocharger and thereby avoid choking charge air flow by the high-pressure compressor stage by first maximally opening the by-pass to allow maximum acceleration of the low-pressure turbine stage, and once the low-pressure compressor stage has reached sufficient speed to provide requested boost that is greater than that which the high-pressure compressor can provide, modulates the by-pass to control boost as long as the high-pressure compressor remains incapable of providing requested boost by itself.
